# EUROPEAN PATENT SPECIFICATION

(11) **EP 3 546 177 B1**
(45) Date of publication and mention of the grant of the patent: **22.07.2020**
(21) Application number: 19155194.4
(22) Date of filing: 04.02.2019
(51) Int. Cl.: B29C 45/40

(54) **EJECTOR UNIT**
AUSWERFEREINHEIT
UNITÉ D'ÉJECTEUR

(30) Priority: 29.03.2018 JP 2018064542
(43) Date of publication of application: 02.10.2019
(73) Proprietor: Sumitomo Heavy Industries, Ltd., Tokyo 141-6025 (JP)
(72) Inventor: ITO, Yosuke, Chiba-shi, Chiba, 263-0001, (JP); KAWANO, Koji, Chiba-shi, Chiba, 263-0001, (JP); MOROZUMI, Tomohito, Chiba-shi, Chiba, 263-0001, (JP); TANAKA, Yoshitada, Chiba-shi, Chiba, 263-0001, (JP)
(74) Representative: Louis Pöhlau Lohrentz

(56) References cited:
- JP-A- H11 198 197
- JP-A- 2000 301 580
- JP-U- H0 531 926
- US-A- 5 648 103
- US-A1- 2013 307 190

## Description

### BACKGROUND OF THE INVENTION

### Field of the Invention

The present invention relates to an ejector unit.

### Description of Related Art

An ejector unit of an injection molding machine includes one or a plurality of rods for extruding a product, and the rod is referred to as an ejector rod. The ejector rod is attached to a crosshead of the ejector unit, and the crosshead is moved forward or rearward by a ball screw. A ball screw nut is fixed to the crosshead. The crosshead and the ejector rod fastened to the crosshead are moved forward or rearward by a rotation of the ball screw. This structure is disclosed in Japanese Unexamined Patent Publication No. 11-198197.

### SUMMARY OF THE INVENTION

In the ejector unit having the above-described structure, both the ejector rod and the ball screw nut are attached to the crosshead. The ejector rod is disposed in a predetermined pattern according to a size, a type, or the like of a mold. In a region in which a flange portion for attaching the ball screw nut to the crosshead exists, the flange portion and the ejector rod interfere with each other, and thus, it is not possible to attach the ejector rod.

Here, a large ejection force of the ejector unit may be required according to a used resin. For this reason, a size of an ejector motor may become larger than a size of a molding machine . In this case, the ball screw also becomes thick, and accordingly, the flange portion of the ball screw nut becomes large . Therefore, the attachment region of the ball screw nut becomes large, and the attachment area easily interferes with the position of an attachment hole of the ejector rod.

The attachment position of the ejector rod to the crosshead may be limited by the mold. Therefore, if the attachment position interferes with the flange portion, there is a possibility that the ejector rod cannot be installed at a desired position according to the mold.

The present invention is made in consideration of the above-described circumstances, and an object thereof is to provide an ejector unit capable of alleviating the restriction of the attachment position of the ejector rod.

In order to achieve the above-described object, according to an aspect of the present invention, there is provided an ejector unit including: an ejector rod; a crosshead to which the ejector rod is attached; a ball screw nut which is attached to the crosshead; and a ball screw shaft which is screwed to the ball screw nut, in which the ejector rod attached to the crosshead is moved forward or rearward by the ball screw nut and the ball screw shaft, the ball screw nut includes a flange portion which constitutes an attachment portion between the crosshead and the ball screw nut, the crosshead includes a flange attachment region which is a region to which the flange portion is attached and an inner region of an outer edge of the attached flange portion, and the ejector rod is attached to the flange attachment region.

According to the aspect of the present invention, it is possible to provide the ejector unit capable of alleviating the restriction of the attachment position of the ejector rod.

### BRIEF DESCRIPTION OF THE DRAWINGS

Fig. 1 is a view showing a state when a mold opening of an injection molding machine according to an embodiment is completed.
Fig. 2 is a view showing a state when a mold of the injection molding machine according to the embodiment is clamped.
Fig. 3 is a perspective sectional view showing an example of a configuration of an ejector unit.
Fig. 4 is a sectional view taken along line IV-IV of Fig. 3.
Fig. 5 is a view showing an example of a configuration in which interference is generated between attachment holes of ejector rods and attachment portions of ball screw nuts.
Fig. 6 is a view showing a state where the ball screw nuts according to the present embodiment are attached to a crosshead having a disposition pattern of Fig. 5.
Fig. 7 is a longitudinal sectional view of a rod fastening hole and the ejector rod along an axial direction.
Fig. 8 is a longitudinal sectional view of a rod fastening hole and an ejector rod according to a first modification example along the axial direction.
Fig. 9 is a plan view of a ball screw nut according to a second modification example.
Fig. 10 is a longitudinal sectional view a rod fastening hole and an ejector rod according to a third modification example along the axial direction.
Fig. 11 is a longitudinal sectional view of a rod fastening hole and an ejector rod according to a fourth modification example along the axial direction.
Fig. 12 is a longitudinal sectional view of a rod fastening hole and an ejector rod according to a fifth modification example along the axial direction.

### DETAILED DESCRIPTION OF THE INVENTION

Hereinafter, an embodiment will be described with reference to the accompanying drawings. In order to facilitate understandings of descriptions, the same reference numerals are assigned to the same components in each drawing as much as possible, and overlapping descriptions thereof are omitted.

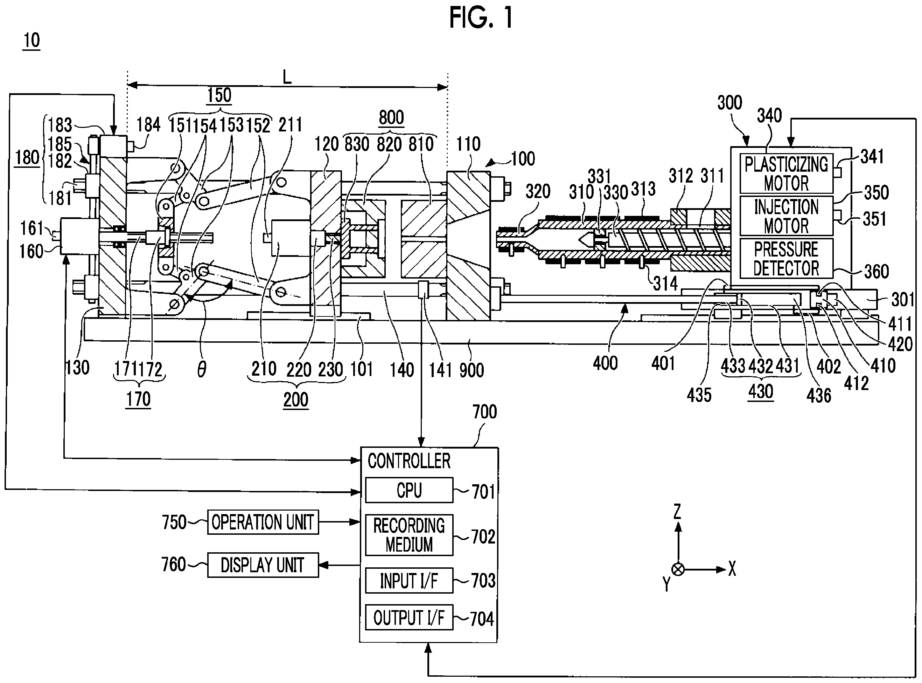

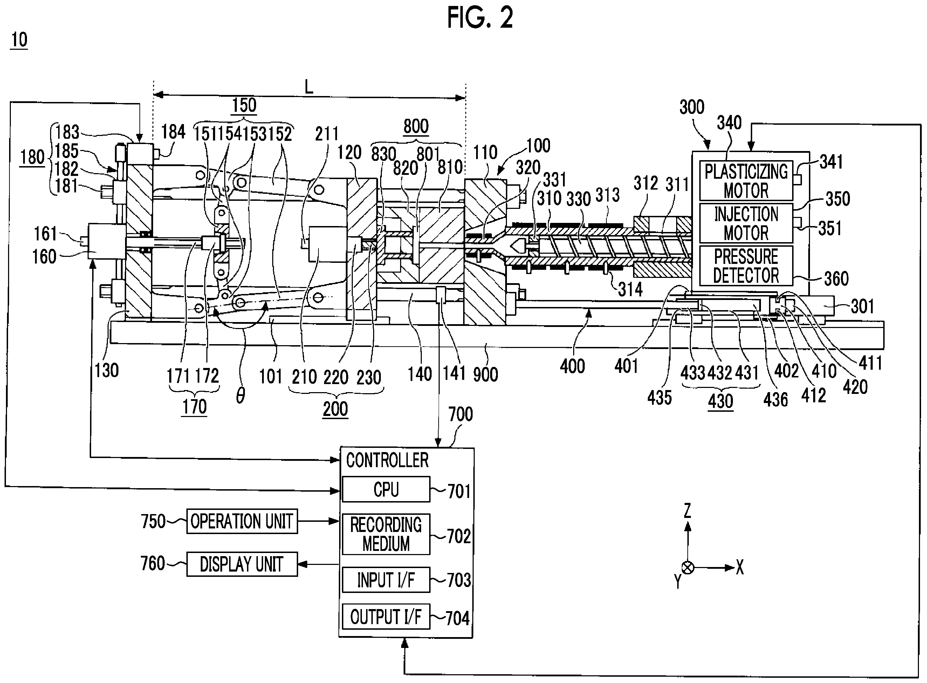

First, the entire schematic configuration of an injection molding machine 10 according to the present embodiment will be described with reference to Figs. 1 and 2.

### (Injection Molding Machine)

Fig. 1 is a view showing a state when a mold opening of an injection molding machine according an embodiment is completed. Fig. 2 is a view showing a state when a mold of the injection molding machine according to the embodiment is clamped. In Figs. 1 and 2, an X direction, a Y direction, and a Z direction are directions perpendicular to each other. The X direction and the Y direction indicate a horizontal direction, and the Z direction indicates a vertical direction. In a case where the a mold clamping unit 100 is a horizontal type mold clamping unit, the X direction is mold opening and closing directions, and the Y direction is a width direction of an injection molding machine 10. As shown in Figs. 1 and 2, the injection molding machines 10 include the mold clamping unit 100, an ejector unit 200, an injection unit 300, a movement unit 400, a controller 700, and a frame 900. Hereinafter, eachcomponent of the injection molding machine 10 will be described.

### (Mold Clamping Unit)

In descriptions of the mold clamping unit 100, a movement direction (right direction in Figs. 1 and 2) of a movable platen 120 when a mold is closed is defined as a front side, and a movement direction (left direction in Figs. 1 and 2) of the movable platen 120 when the mold is open is defined as a rear side.

The mold clamping unit 100 performs closing, clamping, and opening on a mold unit 800. For example, the mold clamping unit 100 is a horizontal type clamping unit and the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame 900. A stationary mold 810 is attached to a surface of the stationary platen 110 facing the movable platen 120.

The movable platen 120 is movable in the mold opening and closing directions with respect to the frame 900. A guide 101 which guides the movable platen 120 is placed on the frame 900. A movable mold 820 is attached to a surface of the movable platen 120 facing the stationary platen 110.

The movable platen 120 moves forward or rearward with respect to the stationary platen 110, and thus, closing, clamping, and opening of the mold are performed. The mold unit 800 includes the stationary mold 810 and the movable mold 820.

The toggle support 130 is connected so as to be separated from the stationary platen 110, and is placed on the frame 900 to be movable in mold opening and closing directions . In addition, the toggle support 130 may be movable along a guide which is placed on the frame 900. The guide of the toggle support 130 may be also used as the guide 101 of the movable platen 120.

In addition, in the present embodiment, the stationary platen 110 is fixed to the frame 900, and the toggle support 130 is movable in the mold opening and closing directions with respect to the frame 900. However, the toggle support 130 may be fixed to the frame 900, and the stationary platen 110 may be movable in the mold opening and closing directions with respect to the frame 900.

The stationary platen 110 and the toggle support 130 are connected to each other with a gap L in the mold opening and closing directions by the tie bar 140. A plurality of (for example, four) tie bars 140 may be used. The tie bars 140 are parallel in the mold opening and closing directions and extend according to a mold clamping force. A tie bar strain detector 141 which detects strain of the tie bar 140 may be provided in at least one tie bar 140. The tie bar strain detector 141 sends a signal indicating a detection result to the controller 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each link group includes a first link 152 and a second link 153 which are bendably/strechably connected to each other by pins or the like. The first link 152 is attached to the movable platen 120 so as to be oscillated by pins or like and the second link 153 is attached to the toggle support 130 so as to be oscillated by pins or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a mold clamping process, a mold opening process, or the like under the control of the controller 700.

In the mold closing process, the mold clamping motor 160 is driven to move the crosshead 151 forward to a mold closing completion position at a set speed. Accordingly, the movable platen 120 moves forward and the movable mold 820 comes into contact with the stationary mold 810. For example, a position or speed of the crosshead 151 is detected using a mold clamping motor encoder 161 or the like. The mold clamping motor encoder 161 detects the rotation of the mold clamping motor 160 and sends a signal indicating the detection result to the controller 700. In addition, a crosshead position detector which detects the position of the crosshead 151 and a crosshead speed detector which detects the speed of the crosshead 151 are not limited to the mold clamping motor encoder 161, and a general detector can be used. In addition, a movable platen position detector which detects the position of the movable platen 120 and a movable platen speed detector which detects the speed of the movable platen 120 are not limited to the mold clamping motor encoder 161, and a general detector can be used.

In the mold clamping process, the mold clamping motor 160 is further driven to further move the crosshead 151 forward from the mold closing completion position to a mold clamping position, and thus, a mold clamping force is generated. When the mold is clamped, a cavity space 801 (refer to Fig. 2) is formed between the movable mold 820 and the stationary mold 810, and the cavity space 801 is filled with a liquid molding material by the injection unit 300. A filled molding material is solidified, and thus, a molding product can be obtained. A plurality of cavity spaces 801 may be provided, and in this case, a plurality of molding products can be simultaneously obtained.

In the mold opening process, the mold clamping motor 160 is driven to move the crosshead 151 rearward to a mold opening completion position at a set speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process and the mold clamping process are collectively set as a series of setting conditions. For example, a speed or positions (including mold opening/closing start position, speed switching position, mold closing completion position, and mold clamping position) of the crosshead 151 and the mold clamping force in the mold closing process and the mold clamping process are collectively set as a series of setting conditions. The mold opening/closing start position, the speed switching position, the mold closing completion position, and the mold clamping position are arranged in this order from the rear side to the front side and indicate start points and end points of sections where the speed is set. The speed is set for each section. The speed switching position may be one or more. The speed switching position may not be set. Only one of the mold clamping position and the mold clamping force may be set.

Setting conditions are similarly set in the mold opening process. For example, the speed or positions (including mold opening start position, speed switching position, and mold opening completion position) of the crosshead 151 in the mold opening process are collectively set as a series of setting conditions. The mold opening start position, the speed switching position, and the mold opening completion position are arranged in this order from the front side to the rear side and indicate start points and end points of sections where the speed is set. The speed is set for each section. The speed switching position may be one or more. The speed switching position may not be set. The mold opening start position maybe the same as the mold clamping position. In addition, the mold opening completion position and the mold opening/closing start position may be the same as each other.

In addition, instead of the speed, the positions, or the like of the crosshead 151, a speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by replacement of the mold unit 800, a temperature change of the mold unit 800, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a touch type where the movable mold 820 comes into contact with the stationary mold 810 becomes a predetermined angle.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably supported by the toggle support 130, and a mold space adjustment motor 183 which rotates the screw nut 182 screwed to the screw shaft 181.

The screw shaft 181 and the screw nut 182 are provided for each tie bar 140. A rotation of the mold space adjustment motor 183 may be transmitted to a plurality of screw nuts 182 via a rotation transmission portion 185. The plurality of screw nuts 182 can be synchronously rotated with each other. In addition, it is possible to rotate the plurality of screw nuts 182 individually by changing a transmission path of the rotation transmission portion 185.

For example, the rotation transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotation transmission portion 185 may include a belt, a pulley, or the like instead of the gear.

An operation of the mold space adjustment mechanism 180 is controlled by the controller 700. The controller 700 drives the mold space adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

The gap L is detected using a mold space adjustment motor encoder 184. The mold space adjustment motor encoder 184 detects a rotation amount or a rotation direction of the mold space adjustment motor 183 and sends a signal indicating a detection result to the controller 700. The detection results of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

The mold space adjustment mechanism 180 rotates one of the screw shaft 181 and the screw nut 182 which are screwed to each other to adjust the gap L. A plurality of mold space adjustment mechanisms 180 maybe used, and a plurality of mold space adjustment motor 183 may be used.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

Similarly to the descriptions of the mold clamping unit 100, in descriptions of the ejector unit 200, the movement direction (right direction in Figs. 1 and 2) of the movable platen 120 when the mold is closed is defined as the front side, and the movement direction (left direction in Figs. 1 and 2) of the movable platen 120 when the mold is opened is defined as the rear side.

The ejector unit 200 ejects the molding product from the mold unit 800. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut. A specific configuration of the motion conversion mechanism 220 will be described later.

The ejector rod 230 can move forward or rearward through a through-hole of the movable platen 120. A front end portion of the ejector rod 230 comes into contact with a movable member 830 which is disposed to be movable forward or rearward inside the movable mold 820. The front end portion of the ejector rod 230 may be connected to the movable member 830 or may not be connected to the movable member 830.

The ejector unit 200 performs an ejection process under the control of the controller 700.

In the ejection process, the ejector motor 210 is driven to move the ejector rod 230 forward from a standby position to an ejection position at a set speed, and thus, the movable member 830 moves forward and the molding product is ejected. Thereafter, the ejector motor 210 is driven to move the ejector rod 230 rearward at a set speed, and thus, the movable member 830 moves rearward to an original standby position. For example, a position or speed of the ejector rod 230 is detected using an ejector motor encoder 211. The ejector motor encoder 211 detects the rotation of the ejector motor 210 and sends a signal indicating a detection result to the controller 700. In addition, an ejector rod position detector which detects the position of the ejector rod 230 and an ejector rod speed detector which detects the speed of the ejector rod 230 are not limited to the ejector motor encoder 211, and a general detector can be used.

### (Injection Unit)

Unlike the descriptions of the mold clamping unit 100 or the descriptions of the ejector unit 200, in descriptions of the injection unit 300, a movement direction (left direction in Figs. 1 and 2) of a screw 330 during filling is referred to as a front side, and a movement direction (right direction in Figs. 1 and 2) of the screw 330 during plasticizing is referred to as a rear side.

The injection unit 300 is installed on a slide base 301 which is movable forward or rearward with respect to the frame 900, and is movable forward or rearward with respect to the mold unit 800. The injection unit 300 comes into contact with the mold unit 800, and the cavity space 801 inside the mold unit 800 is filled with the molding material by the injection unit 300. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a supply port 311 to the inner portion of the cylinder 310. For example, the molding material includes a resin or the like. For example, the molding material is formed into pellets and is supplied to the supply port 311 in a solid state. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 are provided on an outer periphery of the cylinder 310 on a front side of the cooler 312.

The cylinder 310 is divided into a plurality of zones in an axial direction (right and left directions in Figs. 1 and 2) of the cylinder 310. The heating unit 313 and the temperature detector 314 are provided in each zone. The controller 700 controls the heating unit 313 such that a detection temperature of the temperature detector 314 for each zone becomes a set temperature.

The nozzle 320 is provided on the front end portion of the cylinder 310 and presses the mold unit 800. The heating unit 313 and the temperature detector 314 are provided on an outer periphery of the nozzle 320. The controller 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spiral grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 moves rearward. Thereafter, if the screw 330 moves forward, the liquid molding material accumulated in front of the screw 330 is injected from the nozzle 320 and the inside of the mold unit 800 is filled with the liquid molding material.

A back flow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relatively to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the spiral grooves of the screw 330 and moves forward relatively to the screw 330 to an open position (refer to Fig. 1) at which the flow path of the molding material is open. Accordingly, the molding material is fed to the front side of the screw 330.

The back flow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example.

The pressure detector 360 detects a force transmitted between the injection motor 350 and the screw 330. The detected force is converted into a pressure by the controller 700. The pressure detector 360 is provided in a transmission path of the force between the injection motor 350 and the screw 330 and detects a force applied to the pressure detector 360.

The pressure detector 360 sends a signal indicating a detection result to the controller 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a plasticizing process, a filling process, a holding pressure process, or the like under the control of the controller 700.

In the plasticizing process, the plasticizing motor 340 is driven to rotate the screw 330 at a set rotating speed and the molding material is fed forward along the spiral grooves of the screw 330 by the screw 330. According to this, the molding material is gradually melted. The screw 330 moves rearward as the liquid molding material is fed to the front side of the screw 330 and is accumulated in front of the cylinder 310. For example, the rotating speed of the screw 330 is detectedusingaplasticizing motor encoder 341. The plasticizing motor encoder 341 detects the rotation of the plasticizing motor 340 and sends a signal indicating a detection result to the controller 700. In addition, a screw rotating speed detector which detects the rotating speed of the screw 330 is not limited to the plasticizing motor encoder 341, and a general detector may be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating a detection result to the controller 700. If the screw 330 moves rearward to a plasticizing completion position and a predetermined amount of the molding materials is accumulated in front of the screw 330, the plasticizing process is completed.

In the filling process, the injection motor 350 is driven to move the screw 330 forward at a set speed, and the cavity space 801 inside the mold unit 800 is filled with the liquid molding material accumulated in front of the screw 330. For example, a position or speed of the screw 330 is detected using an injection motor encoder 351. The injection motor encoder 351 detects the rotation of the injection motor 350 and sends a signal indicating a detection result to the controller 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

Moreover, in the filling process, after the position of the screw 330 reaches the set position, the screw 330 may temporarily stop at the set position, and thereafter, the V/P switching may be performed. Immediately before the V/P switching, instead of stopping the screw 330, the screw 330 may move forward or may move rearward at a very slow speed. Moreover, a screw position detector which detects the position of the screw 330 and a screw speed detector which detects the speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 800. Insufficient molding materials can be replenished by cooling shrinkage in the mold unit 800. For example, the holding pressure is detected using the pressure detector 360. The pressure detector 360 sends a signal indicating a detection result to the controller 700. A set value of the holding pressure may be changed according to an elapsed time from the starting of the holding pressure process, or the like.

In the holding pressure process, the molding material inside the cavity space 801 in the mold unit 800 is gradually cooled, and when the holding pressure process is completed, an inlet of the cavity space 801 is closed by the molding material which is solidified. This state is referred to as a gate seal, and a backflow of the molding material from the cavity space 801 is prevented. After the holding pressure process, a cooling process starts. In the cooling process, solidification of the molding material in the cavity space 801 is performed. In order to shorten a molding cycle time, the plasticizing process may be performed during the cooling process.

In addition, the injection unit 300 of the present embodiment is an inline and screw type injection unit. However, the injection unit 300 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### (Movement Unit)

Similarly to the descriptions of the injection unit 300, in descriptions of the movement unit 400, the movement direction (left direction in Figs. 1 and 2) of the screw 330 during filling is referred to as a front side, and the movement direction (right direction in Figs. 1 and 2) of the screw 330 during plasticizing is referred to as a rear side.

The movement unit 400 moves the injection unit 300 forward or rearward with respect to the mold unit 800. In addition, the movement unit 400 presses the nozzle 320 to the mold unit 800 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a control signal from the controller 700 and by the rotation torque corresponding to the control signal from the controller 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 moves forward, and thus, the nozzle 320 is pressed to the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 810.

In addition, in the present embodiment, the movement unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### (Controller)

For example, the controller 700 includes a computer, and as shown in Figs. 1 and 2, the controller 700 includes a Central Processing Unit (CPU) 701, a recording medium 702 such as a memory, an input interface 703, and an output interface 704. The controller 700 performs various controls by causing the CPU 701 to execute a program stored in the recording medium 702. In addition, the controller 700 receives a signal from the outside through the input interface 703 and transmits a signal to the outside through the output interface 704.

The controller 700 repeatedly performs the mold closing process, the mold clamping process, the mold opening process, or the like to repeatedly manufacture the molding product. In addition, the controller 700 performs the plasticizing process, the filling process, the holding pressure process, or the like during the mold clamping process. A series of operations to obtain the molding product, for example, an operation from the start of the plasticizing process to the start of the next plasticizing process is also referred to as a "shot" or a "molding cycle". In addition, a time required for once shot is also referred to as a "molding cycle time".

For example, the once molding cycle includes the plasticizing process, the mold closing process, the mold clamping process, the filling process, the holding pressure process, the cooling process, the mold opening process, and the ejection process in this order. Here, this order is an order of the start of each process. In the filling process, the holding pressure process, and the cooling process are performed between the start of the mold clamping process to the end of the mold clamping process. The end of the mold clamping process coincides with the start of the mold opening process. In addition, in order to shorten the molding cycle time, the plurality of processes may be simultaneously performed. For example, the plasticizing process may be performed of the cooling process of the previous molding cycle, and in this case, the molding closing process may be performed at the final stage of the molding cycle. In addition, the filling process may start during the molding closing process. Moreover, the ejection process may be started during the mold opening process. In a case where an on/off valve which opens and closes the flow path of the nozzle 320 is provided, the mold opening process may be started during the plasticizing process. Accordingly, even when the molding opening process starts during the plasticizing process, if the on/off valve closes the flow path of the nozzle 320, the molding material does not leak from the nozzle 320.

The controller 700 is connected to an operation unit 750 or the display unit 760. The operation unit 750 receives an input operation from a user and outputs a signal corresponding to the input operation to the controller 700. The display unit 760 displays an operation screen corresponding to the input operation of the operation unit 750 under the control of the controller 700.

The operation screen is used for the setting of the injection molding machine 10 or the like. A plurality of operation screens are provided, and thus, are displayed to be switched or to overlap each other. A user operates the operation unit 750 while viewing the operation screen displayed by the display unit 760 to perform the setting (including an input of a set value) of the injection molding machine 10 or the like.

For example, the operation unit 750 and the display unit 760 may include a touch panel to be integrated with each other. In addition, in the present embodiment, the operation unit 750 and the display unit 760 are integrated with each other. In addition, a plurality of operation units 750 may be provided.

### (Detail of Ejector Unit)

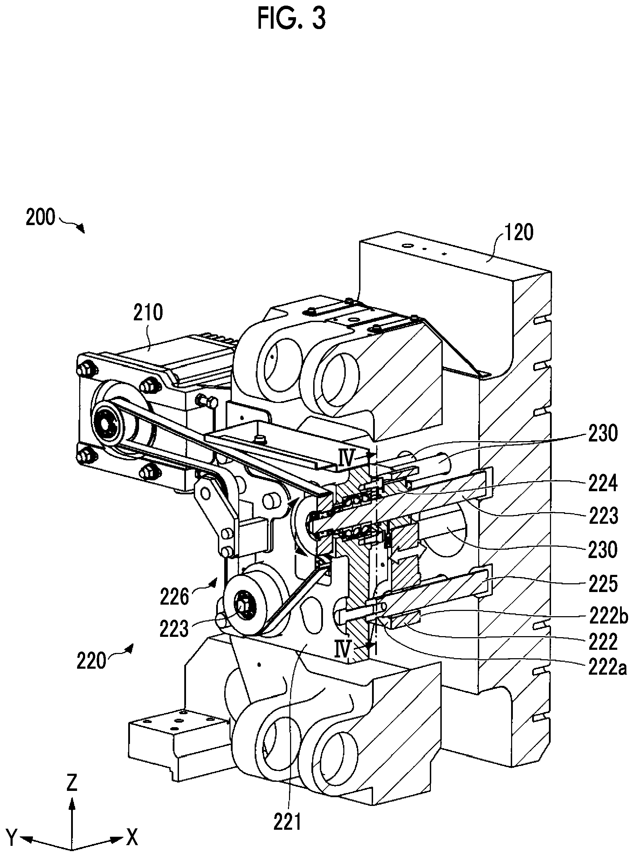

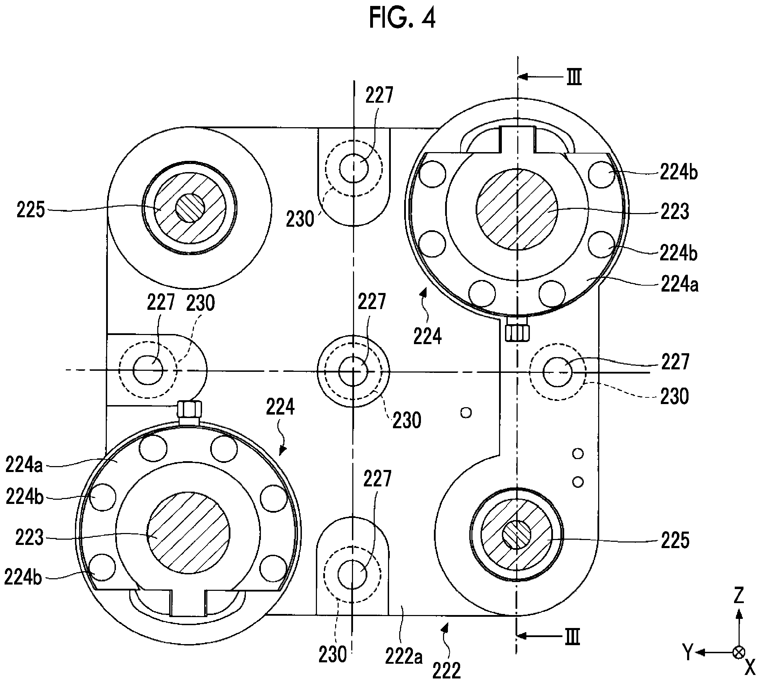

Next, a main configuration of the ejector unit 200 will be described with reference to Figs. 3 and 4. Fig. 3 is a perspective sectional view showing an example of a configuration of the ejector unit 200. Fig. 4 is a sectional view taken along line IV-IV of Fig. 3, and a view showing an example of a disposition of the ejector rods 230, guide bars 225, and ball screw nuts 224 on a main surface of a crosshead 222.

As described above, the ejector unit 200 includes the ejector motor 210, the motion conversion mechanism 220, and the ejector rods 230, and is disposed behind the movable platen 120.

As described above, the motion conversion mechanism 220 is an element which converts the rotary motion of the ejector motor 210 into the linear motions of the ejector rods 230, and in this example, includes a support body 221, the crosshead 222, a pair of ball screw shafts 223, the ball screw nuts 224, and the pair of guide bars 225.

The support body 221 is fixed at a predetermined distance behind the movable platen 120 via the ball screw shafts 223 and the guide bars 225. The support body 221 rotatably supports one end of each ball screw shaft 223 via a bearing. In addition, the other end of the ball screw shaft 223 is supported by the movable platen 120. In addition, one end of each guide bar 225 is fixed to the support body 221 and the other end of the guide bar 225 is fixed to the movable platen 120.

The crosshead 222 is installed to be movable in the X direction between the support body 221 and the movable platen 120. The pair of ball screw shafts 223 and the pair of guide bars 225 penetrate the crosshead 222, and thus, the crosshead 222 is movable in the X direction along the guide bars 225. The crosshead 222 is a plate-shaped member which includes main surface 222a and 222b which directly faces a traveling direction (X direction) of each ejector rod 230.

The ball screw shaft 223 is screwed to an inner periphery of each ball screw nut 224, and the ball screw nut 224 is fixed to the crosshead 222. The ball screw nut 224 includes a flange portion 224a which extends radially outward and is fixed to the main surface 222a of the crosshead 222 via the flange portion 224a. That is, the flange portion 224a constitutes an attachment portion of the crosshead 222 of the ball screw nut 224. Aplurality of nut fastening holes 224b are provided in the flange portion 224a to penetrate the flange portion 224a in the X direction. Bolt are fastened to the crosshead through the nut fastening holes 224b in a state where the flange portion 224a comes into surface contact with the main surface 222a of the crosshead 222, and thus, the ball screw nut 224 is fixed to the crosshead 222. In addition, in the present embodiment, the example in which the flange portion 224a is fixed to the main surface 222a on a rear side (X negative direction side) of the crosshead 222 is described. However, the flange portion 224a may be fixed to the main surface 222b on a front side (X positive direction side) of the crosshead 222.

In addition, a proximal end portion of each ejector rod 230 is fixed to the main surface 222b of the crosshead 222. Each ejector rod 230 is disposed to be movable forward or rearward in a through hole of the movable platen 120. Accordingly, the ball screw shafts 223 rotate, and thus, the crosshead 222 moves forward or rearward in the X direction, and the ejector rods 230 can move forward or rearward.

The ejector unit 200 is driven by the ejector motor 210, and a belt transmission mechanism 226 including a pulley or a timing belt is disposed between the ejector motor 210 and the ball screw shafts 223.

Accordingly, if the ejector motor 210 is driven, a rotation of the ejector motor 210 is transmitted to the ball screw shafts 223 via the belt transmission mechanism 226, and thus, the ball screw shafts 223 rotate in conjunction with the ejector motor 210. Moreover, the rotary motion is converted into the linear motion by the ball screw shafts 223 and the ball screw nuts 224, and the crosshead 222 to which the ball screw nuts 224 are fixed and the ejector rods 230 which are fixed to the crosshead 222 are moved forward or rearward in the X direction. That is, the ejector unit 200 is a so-called axial rotation nut movement type movement unit.

As shown in Fig. 4, in the crosshead 222, in a substantially rectangular main surface, the pair of ball screw shafts 223 is disposed on one diagonal line and the pair of guide bars 225 is disposed on another diagonal line.

In addition, a plurality of attachment holes 227 for fixing the ejector rods 230 are provided on the main surface 222a of the crosshead 222. The plurality of attachment holes 227 are provided to penetrate the crosshead 222 along the X direction and is disposed at a predetermined pattern. For example, in the example of Fig. 4, five attachment holes 227 are disposed in a substantially cross shape. A disposition pattern of the attachment holes 227 can be set according to a size of the movable mold 820 attached to the movable platen 120, a shape or material of the molding product, or the like.

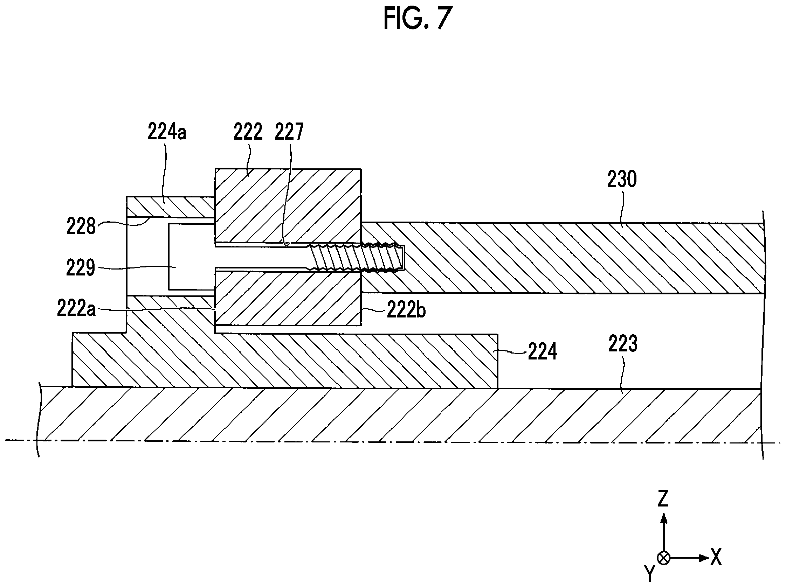

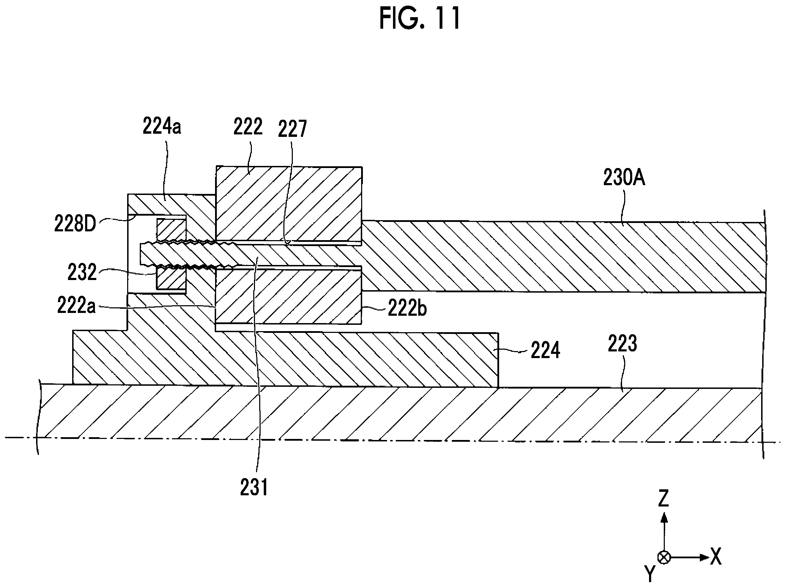

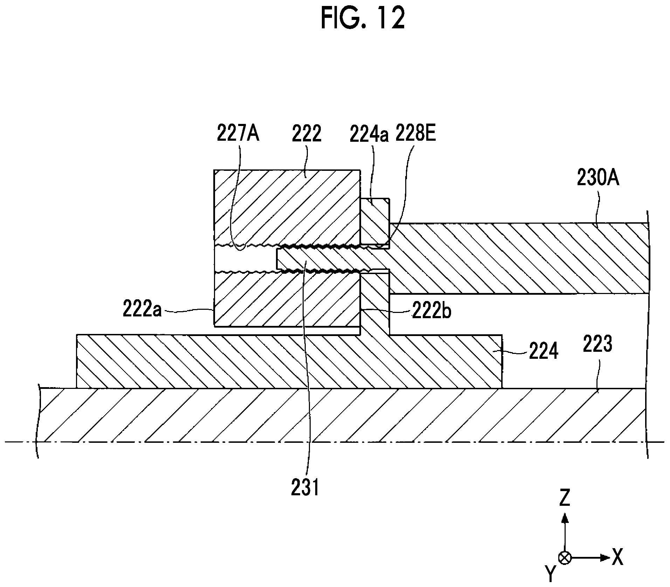

For example, a bolt is fastened to pass through the attachment hole 227 from the rear-side main surface 222a side in a state where an end surface of the ejector rod 230 come into surface contact with the front-side main surface 222b of the crosshead 222, and thus, the ejector rod 230 is fixed to the crosshead 222 by the bolt fastening (refer to Fig. 7). In addition, means for fixing the ejector rod 230 to the crosshead 222 may be nut fastening (refer to Fig. 11) or screw type fastening (refer to Fig. 12).

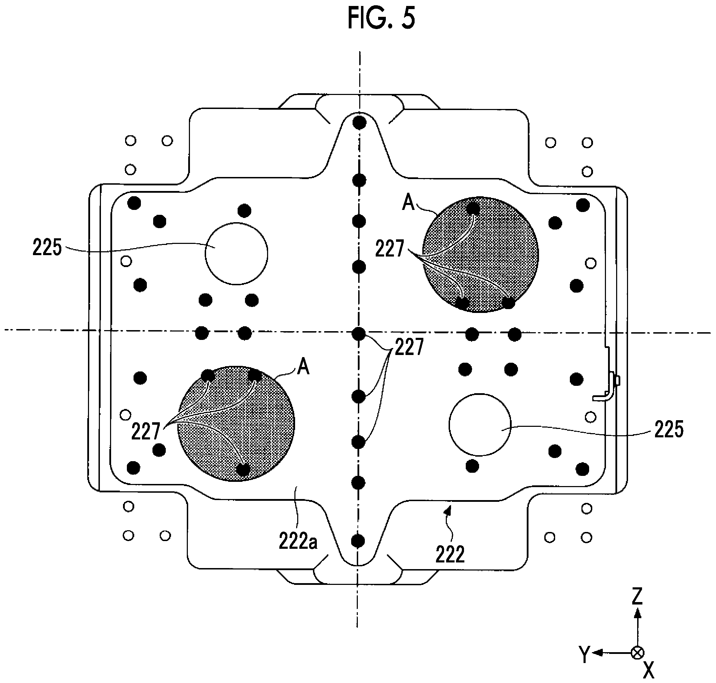

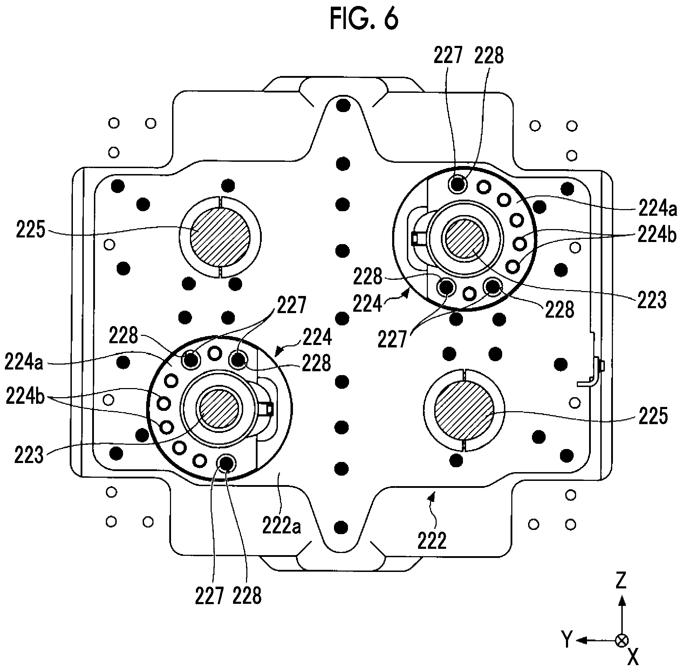

Fig. 5 is a view showing an example of a configuration in which interference is generated between the attachment holes 227 of the ejector rods 230 and the attachment portions of the ball screw nuts 224. Fig. 6 is a view showing a state where the ball screw nuts 224 according to the present embodiment are attached to the crosshead 222 having a disposition pattern of Fig. 5.

As shown in Fig. 5, the plurality of disposition patterns of the attachment holes 227 may be provided on the same crosshead 222. However, if the disposition patterns are complicated and a large number of attachment holes 227 are provided, as shown in Fig. 5, the attachment holes 227 are disposed in attachment regions A of the ball screw nuts 224, and thus, positions of the attachment holes 227 and the attachment regions A of the ball screw nut 224 may interfere with each other. In particular, for example, in order to cope with requirement of a large ejection force in the ejector unit 200 due to influences of the resin of the molding product or the like, a size of the ejector motor 210 may become larger than a size of the molding machine. In this case, the ball screw shaft 223 also becomes thick, and accordingly, a diameter of the flange portion 224a of the ball screw nut 224 also increases. Therefore, the attachment region A of the ball screw nut 224 becomes large, and the attachment area A easily interferes with the position of the attachment hole 227 of the ejector rod 230. In addition, the attachment region A of the ball screw nut 224 can also be expressed as a "flange attachment region" which is a region where the flange portion 224a of the ball screw nut 224 is attached to the crosshead 222 and which is an inner region of an outer edge of the attached flange portion 224a.

If the attachment region A of each ball screw nut 224 and the attachment position of each ejector rod 230 interfere with each other, the ejector rod 230 cannot be installed in a desired position, and usable molds and materials may be restricted.

Accordingly, in the present embodiment, as shown in Fig. 6, rod fixing holes 228 for attaching the ejector rods 230 to the flange portions 224a of the ball screw nuts 224 are provided at positions at which the ball screw nuts 224 and the attachment holes 227 of the ejector rods 230 interfere with each other. Specifically, a head portion of a bolt 229 (refer to Fig. 7) for fastening each ejector rod 230 does not pass through each nut fastening hole 224b, each rod fixing hole 228 is formed at the position of the attachment hole 227 so as to have a diameter of a size of such an extent that the head portion of the bolt 229 for fastening the ejector rod 230 passes through. In addition, a radial size of the flange portion 224a may increase according to the size of the rod fixing hole 228, and a circumferential position of the nut fastening hole 224b may be deviated according to the position of the rod fixing hole 228.

Fig. 7 is a longitudinal sectional view of the rod fixing hole 228 and the ejector rod 230 along an axial direction. As shown in Fig. 7, a diameter of the rod fixing hole 228 is set such that the head portion of the bolt 229 for fastening the ejector rod 230 can pass through the rod fixing hole 228. The bolt 229 inserted into the rod fixing holes 228 passes through the rod fixing holes 228 of the flange portion 224a, passes through the attachment hole 227 of the crosshead 222, advances to the main surface 222b on the opposite side, and is screwed to the ejector rod 230. The ejector rod 230 is fixed to the crosshead 222 in a state where the head portion of the bolt 229 comes into contact with the main surface 222a of the crosshead 222 and an end surface on a proximal end side of the ejector rod 230 comes into contact with the main surface 222b of the crosshead 222.

In this way, in the present embodiment, the ejector rod 230 is attached to the flange attachment region A. More specifically, when viewed in the X direction, the rod fixing hole 228 is provided at a position at which at least a portion of the ejector rod 230 overlaps the flange portion 224a of the ball screw nut 224, and the ejector rod 230 is attached at the position corresponding to each rod fixing hole 228 of the crosshead 222. Accordingly, even in a case where the ball screw nut 224 and the attachment portion of the ejector rod 230 interfere with each other, the ejector rod 230 can be fixed to the crosshead 222, and thus, it is possible to alleviate restriction of an attachment position of the ejector rod 230.

That is, in the present embodiment, the rod fixing hole 228 functions as fixing means capable of fixing the ejector rod 230 to the crosshead 222 via the flange portion 224a.

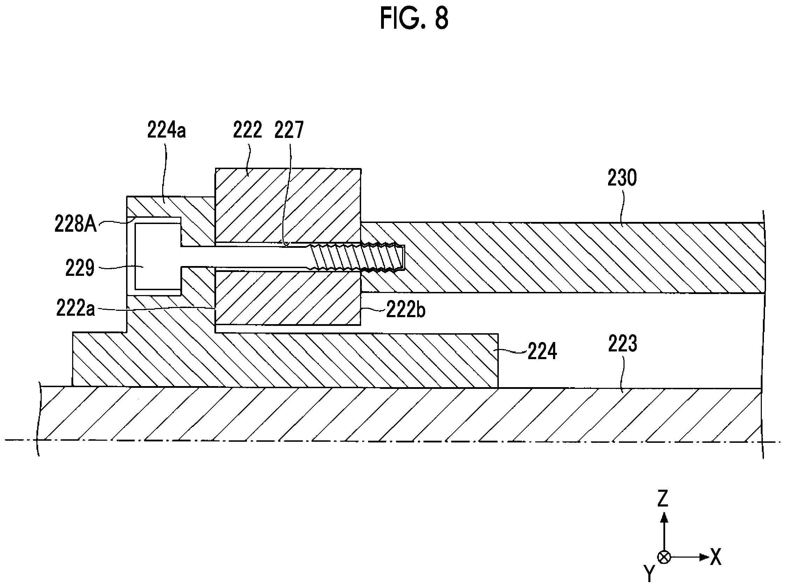

A first modification example will be described with reference to Fig. 8. Fig. 8 is a longitudinal sectional view of a rod fixing hole 228A (fixing means) and the ejector rod 230 according to the first modification example along the axial direction. As shown in Fig. 8, the rod fixing hole 228A may be a counterbore in which the head portion of the bolt 229 for fastening the ejector rod 230 can be embedded. In this configuration, the head portion of the bolt 229 comes into contact with a bottom surface of the flange portion 224a of the ball screw nut 224, the end surface on the proximal end side of the ejector rod 230 comes into contact with the main surface 222b of the crosshead 222, and the ejector rod 230 is fixed to the crosshead 222 in a state where the flange portion 224a is interposed therebetween. Accordingly, the fixing of the ejector rod 230 to the crosshead 222 and the fixing of the ball screw nut 224 to the crosshead 222 can be performed at the same time by the single bolt 229, and thus, the number of bolts decreases, and a cost decreases.

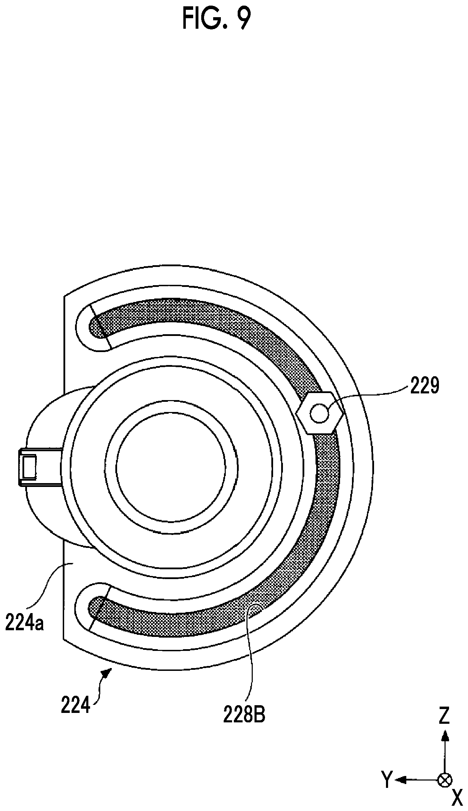

Fig. 9 is a plan view of the ball screw nut 224 according to a second modification example. As shown in Fig. 9, a rod fixing hole 228B (fixing means) may be an ellipsoidal counterbore extending along a circumferential direction around the ball screw shaft 223 in the flange portion 224a of the ball screw nut 224. This eliminates a need to position the rod fixing holes in the flange portion 224a based on the position of the attachment hole 227, and thus, it is possible to improve versatility of the ball screw nut 224.

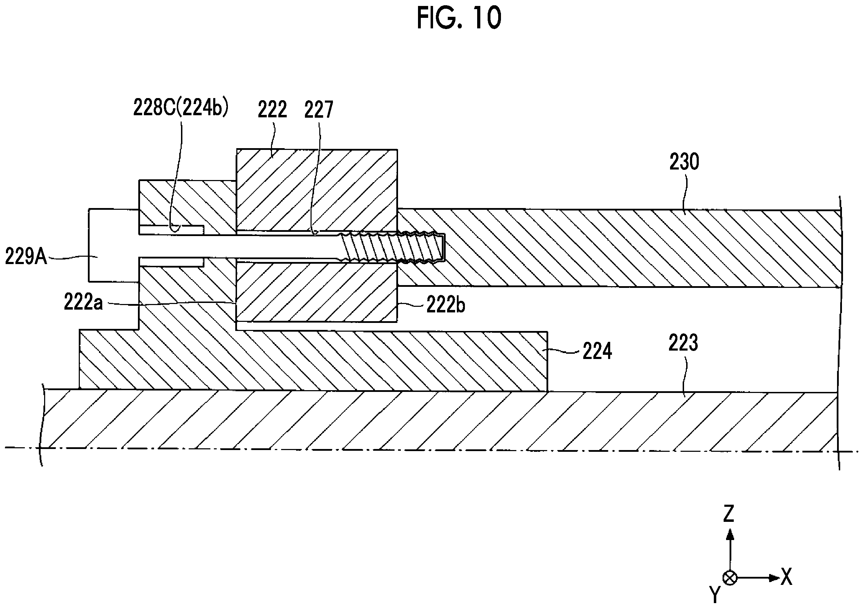

Fig. 10 is a longitudinal sectional view a rod fixing hole 228C and the ejector rod 230 according to a third modification example along the axial direction. The rod fixing hole 228C is diverted from the nut fastening hole 224b. In this case, a head portion of the bolt 229A cannot pass through the hole, and the ejector rod 230 cannot be fastened by the bolt 229 for fastening the ejector rod 230 in the related art. However, for example, as shown in Fig. 10, the shaft of the bolt 229A is lengthened by a thickness of the flange portion 224a, and thus, the ejector rod 230 can be fixed to the crosshead 222. In this case, the ejector rod 230 is fixed to the crosshead 222 in a state where the head portion of the bolt 22 9A comes into contact with a surface on the X negative side of the flange portion 224a and the end surface on the proximal end side of the ejector rod 230 comes into contact with the main surface 222b of the crosshead 222.

That is, in the third modification example, the bolt 229A functions as fixing means capable of fixing the ejector rod 230 to the crosshead 222 via the flange portion 224a.

Fig. 11 is a longitudinal sectional view of a rod fixing hole 228D (fixing means) and an ejector rod 230A according to a fourth modification example along the axial direction. In the fourth modification example, the ejector rod 230A includes a screw shaft 231 which protrudes from an end on the X negative direction side of the ejector rod 230A, and the screw shaft 231 passes through the attachment hole 227 of the crosshead 222 to advance to the main surface 222a side and is fastened by a nut 232, that is, the ejector rod 230A is fixed to the crosshead 222 by nut fastening. In this configuration, a diameter of the rod fixing hole 228D is set such that the nut 232 for fastening the ejector rod 230 can pass through the rod fixing hole 228D. Accordingly, the present embodiment can also be applied to the nut fastening.

Fig. 12 is a longitudinal sectional of a rod fixing hole 228E (fixing means) and the ejector rod 230A according to a fifth modification example along the axial direction. In the fifth modification example, the ejector rod 230A includes the screw shaft 231 which protrudes from the end portion on the X negative direction side of the ejector rod 230A, and the screw shaft 231 passes through a rod fixing hole 228E of the flange portion 224a of the ball screw nut 224 and is screwed to a tapped attachment hole 227A of the crosshead 222, that is, the ejector rod 230A is fixed to the crosshead 222 by a screw type fastening structure. In this configuration, the flange portion 224a of the ball screw nut 224 abuts against the front-side main surface 222b of the crosshead 222 to be fixed to the crosshead 222. A diameter of the rod fixing hole 228E is such that the screw shaft 231 can pass through the rod fixing hole 228E. Accordingly, the present embodiment can be also applied to the screw type fastening structure.

Hereinbefore, the present embodiment is described with reference to specific examples. However, the present disclosure is not limited to these specific examples. Appropriate design modifications applied to these specific examples by a person skilled in the art are also included within the scope of the present invention as defined by the scope of the appended claims.

### Brief Description of the Reference Symbols

10: injection molding machine
120: movable platen
200: ejector unit
210: ejector motor
220: motion conversion mechanism
222: crosshead
222a, 222b: main surface
223: ball screw shaft
224: ball screw nut
224a: flange portion
228, 228A, 228B, 228C, 228D, 228E: rod fixing hole (fixing means)
229A: bolt (fixing means)
230: ejector rod
A: flange attachment region

## Claims

1. An ejector unit (200) comprising:
an ejector rod (230);
a crosshead (222) to which the ejector rod (230) is attached;
a ball screw nut (224) which is attached to the crosshead (222); and
a ball screw shaft (223) which is screwed to the ball screw nut (224),
wherein the ejector rod (230) attached to the crosshead (222) is moved forward or rearward by the ball screw nut (224) and the ball screw shaft (223),
wherein the ball screw nut (224) includes a flange portion (224a) which constitutes an attachment portion between the crosshead (222) and the ball screw nut (224),
wherein the crosshead (222) includes a flange attachment region (A) which is a region to which the flange portion (224a) is attached and an inner region of an outer edge of the attached flange portion (224a), **characterised in that** the ejector rod (230) is attached to the flange attachment region (A).

2. The ejector unit according to claim 1,
wherein the flange portion (224a) includes a rod fixing hole (228, 228A, 228B, 228C, 228D, 228E) to which the ejector rod (230) is attached, and
wherein the ejector rod (230) is attached at a position corresponding to the rod fixing hole (228, 228A, 228B, 228C, 228D, 228E) of the crosshead (222).

3. The ejector unit according to claim 2,
wherein a diameter of the rod fixing hole (228, 228A, 228B, 228C, 228D, 228E) is set such that a bolt (229) or a nut (232) for fastening the ejector rod (230) passes through the rod fixing hole(228, 228A, 228B, 228C, 228D, 228E).

4. The ejector unit according to claim 2 or 3,
wherein the rod fixing hole (228A) is a counterbore in which a bolt (229) or a nut (232) for fastening the ejector rod (230) is embedded.

5. The ejector unit according to any one of claims 2 to 4,
wherein the rod fixing hole (228B) includes an ellipsoidal counterbore which extends along a circumferential direction around the ball screw shaft (223) in the flange portion (224a) of the ball screw nut (224).

## Patentansprüche

1. Auswerfereinheit (200), umfassend:
eine Auswerferstange (230);
ein Querhaupt (222), an dem die Auswerferstange (230) angebracht ist;
eine Kugelumlaufmutter (224), die am Querhaupt (222) angebracht ist; und
eine Kugelumlaufspindel (223), die an die Kugelumlaufmutter (224) geschraubt ist,
wobei die Auswerferstange (230), die am Querhaupt (222) angebracht ist, durch die Kugelumlaufmutter (224) und die Kugelumlaufspindel (223) vorwärts oder rückwärts bewegt wird,
wobei die Kugelumlaufmutter (224) einen Flanschabschnitt (224a) enthält, der einen Anbringungsabschnitt zwischen dem Querhaupt (222) und der Kugelumlaufmutter (224) bildet,
wobei das Querhaupt (222) einen Flanschanbringungsbereich (A) enthält, der ein Bereich, an dem der Flanschabschnitt (224a) angebracht ist, und ein Innenbereich einer Außenkante des angebrachten Flanschabschnitts (224a) ist, **dadurch gekennzeichnet, dass**
die Auswerferstange (230) am Flanschanbringungsbereich (A) angebracht ist.

2. Auswerfereinheit nach Anspruch 1,
wobei der Flanschabschnitt (224a) ein Stangenbefestigungsloch (228, 228A, 228B, 228C, 228D, 228E) enthält, an dem die Auswerferstange (230) angebracht ist, und
wobei die Auswerferstange (230) an einer Position angebracht ist, die dem Stangenbefestigungsloch (228, 228A, 228B, 228C, 228D, 228E) des Querhaupts (222) entspricht.

3. Auswerfereinheit nach Anspruch 2,
wobei ein Durchmesser des Stangenbefestigungslochs (228, 228A, 228B, 228C, 228D, 228E) derart eingerichtet ist, dass ein Bolzen (229) oder eine Mutter (232) zum Befestigen der Auswerferstange (230) das Stangenbefestigungsloch (228, 228A, 228B, 228C, 228D, 228E) durchläuft.

4. Auswerfereinheit nach Anspruch 2 oder 3,
wobei das Stangenbefestigungsloch (228A) eine Senkbohrung ist, in der ein Bolzen (229) oder eine Mutter (232) zum Befestigen der Auswerferstange (230) eingebettet ist.

5. Auswerfereinheit nach einem der Ansprüche 2 bis 4,
wobei das Stangenbefestigungsloch (228B) eine ellipsoidische Senkbohrung enthält, die entlang einer Umfangsrichtung um die Kugelumlaufspindel (223) im Flanschabschnitt (224a) der Kugelumlaufmutter (224) verläuft.

## Revendications

1. Une unité d'éjecteur (200) comprenant :
une tige d'éjecteur (230) ;
une biellette (222) sur laquelle la tige d'éjecteur (230) est fixée ;
un écrou à vis à bille (224) qui est fixé sur la biellette (222) ; et
un axe de vis à bille (223) qui est vissé sur l'écrou à vis à bille (224),
dans laquelle la tige d'éjecteur (230) fixée sur la biellette (222) est déplacée vers l'avant ou vers l'arrière par l'écrou à vis à bille (224) et l'axe de vis à bille (223),
dans laquelle l'écrou à vis à bille (224) comprend une partie de bride (224a) qui constitue une partie de fixation entre la biellette (222) et l'écrou à vis à bille (224),
dans laquelle la biellette (222) comprend une zone de fixation de bride (A) qui est une zone sur laquelle la partie de bride (224a) est fixée, et une zone interne d'un bord externe de la partie de bride fixée (224a), **caractérisée en ce que**
la tige d'éjecteur (230) est fixée sur la zone de fixation de bride (A).

2. L'unité d'éjecteur selon la revendication 1,
dans laquelle la partie de bride (224a) comprend un orifice de fixation de tige (228, 228A, 228B, 228C, 228D, 228E) sur lequel la tige d'éjecteur (230) est fixée, et
dans laquelle la tige d'éjecteur (230) est fixée à un emplacement qui correspond à l'orifice de fixation de tige (228, 228A, 228B, 228C, 228D, 228E) de la biellette (222).

3. L'unité d'éjecteur selon la revendication 2,
dans laquelle un diamètre de l'orifice de fixation de tige (228, 228A, 228B, 228C, 228D, 228E) est défini de sorte qu'un boulon (229) ou un écrou (232) destiné à fixer la tige d'éjecteur (230) passe par l'orifice de fixation de tige (228, 228A, 228B, 228C, 228D, 228E).

4. L'unité d'éjecteur selon la revendication 2 ou 3,
dans laquelle l'orifice de fixation de tige (228A) est un contre-alésage dans lequel un boulon (229) ou un écrou (232) destiné à fixer la tige d'éjecteur (230) est intégré.

5. L'unité d'éjecteur selon l'une quelconque des revendications 2 à 4,
dans laquelle l'orifice de fixation de tige (228B) comprend un contre-alésage ellipsoïdal qui s'étend le long d'une direction circonférentielle autour de l'axe de vis à bille (223) dans la partie de bride (224a) de l'écrou à vis à bille (224).
